# EUROPEAN PATENT SPECIFICATION

(11) **EP 1 508 363 B1**
(45) Date of publication and mention of the grant of the patent: **15.11.2006**
(21) Application number: 04254769.5
(22) Date of filing: 07.08.2004
(51) Int. Cl.: B01F 3/08, C02F 1/50

(54) **Process for treating aqueous systems**
Verfahren zur Behandlung von wässrige Systeme
Procédé pour le traitement des systèmes aqueux

(30) Priority: 21.08.2003 US 496872 P
(43) Date of publication of application: 23.02.2005
(73) Proprietor: ROHM AND HAAS COMPANY, Philadelphia, Pennsylvania 19106-2399 (US)
(72) Inventor: Lipiecki, Francis Joseph, Haddonfield New Jersey 08033 (US); Maroldo, Stephen Gerard, Ambler Pennsylvania 19002 (US); Pendell, Barry Jack, Lansdale Pennsylvania 19446 (US); Simon, Ethan Scott, Abington Pennsylvania 19001 (US)
(74) Representative: Kent, Venetia Katherine

(56) References cited:
- EP-A- 0 107 009
- EP-A- 0 680 695
- WO-A-00/54735
- GB-A- 2 115 829

## Description

The present invention relates to a process for treating aqueous systems directly with stable emulsions comprising water insoluble biocides and biocidal formulations having low water solubility directly before introducing them to aqueous systems. More particularly, the invention is directed to a process for preparing emulsions of biocides and biocidal formulations using a micro-mixing device and treating aqueous systems by direct addition of the emulsions produced by high-shear-mixing.

Metallic components used in industrial processes and heating ventilation and air conditioning (HVAC) operations that are in contact with fluid media such as, for example, cooling water experience three major problems: metal corrosion, deposition of solids and the growth of microorganisms. The three problems are interrelated in that the ability to control one problem often influences the ability to effectively control the remaining problems. The most common method to address the problems is to add a combination of chemical agents and corrosion inhibitors to the fluid media in contact with the metallic components. Polymeric dispersants and phosphonates are commonly used to inhibit the deposit of solids referred to as scale. Biocidal compositions, including oxidizing biocides such as chlorine or bromine, are often used to control the deposition and growth of microorganisms. However, the introduction of active ingredients having little to no water solubility in to aqueous systems has remained problematic. Such ingredients must be dosed in to aqueous systems as emulsions using substantial quantities of surfactants, co-surfactants, emulsifiers, stabilizers, polymers, copolymers and solvents.

European Patent Publication No. EP 1 161 221 A1 discloses a method for producing cosmetic or pharmaceutical formulations using a micro-mixer. Two or more liquid components from separate storage chambers are mixed by feeding the liquid components through a micro-mixer. The method describes micro-mixing of a liquid in an oil phase with a liquid in an aqueous phase. However, the method does not disclose micro-mixing of solid active ingredients as concentrates and dispersions. Moreover, the method does not teach making stable emulsions of active ingredients including biocides, corrosion inhibitors, scale inhibitors, acrylic polymers and agricultural chemicals that are water insoluble. The method also does not teach stable emulsions including such active ingredients that could not be made by conventional mixing processes and stable emulsions including such active ingredients that do not require additives including surfactants or organic solvents for their stability.

Inventors have discovered a process for preparing emulsions directly before use, the emulsions comprising one or more water insoluble active ingredients including biocides, corrosion inhibitors, scale inhibitors, acrylic polymers, agricultural chemicals and combinations thereof. Inventors have also discovered a process for treating aqueous systems with water insoluble active ingredients by preparing an aqueous emulsion of the active ingredients using a high-shear-mixing apparatus directly before they are introduced to an aqueous system. The resulting emulsions are free of additives, including surfactants, co-surfactants, emulsifiers, and stabilizers, and are directly dosed into an aqueous environment of use.

Accordingly, the invention provides a process for preparing emulsions directly before use comprising the step of: high-shear-mixing one or more water insoluble active ingredients and water.

The invention also provides an emulsion free of additives comprising one or more water insoluble active ingredients and water, wherein the emulsion is prepared by high-shear-mixing one or more water insoluble active ingredients and water.

The invention also provides a process for treating aqueous systems comprising the steps of: (a) high-shear-mixing water and an aqueous dispersion of one or more water insoluble active ingredients to form an emulsion; and (b) dosing the emulsion directly to an aqueous environment of use.

The invention also provides a process for recycling an emulsion through an aqueous system comprising the steps of: (a) high-shear-mixing water and an aqueous dispersion of one or more water insoluble active ingredients; (b) dosing the emulsion directly to an aqueous system; and (c) high-shear-mixing portions of the aqueous system at time intervals selected from periodic, irregular and continuous; thereby recycling portions of the dosed emulsion back into the aqueous system.

As used herein, the term "water insoluble", as applied to active ingredients, refers to compounds having low, including very low water solubility and including having a solubility less than 1 gram per 100 grams of water under the conditions of emulsion formation. The term also refers to compounds having low, including very low water solubility. The term "water soluble", as applied to active ingredients including organic compounds, indicates that the compounds have a solubility of at least 1 gram per 100 grams of water, including at least 10 grams per 100 grams of water and including at least about 50 grams per 100 grams of water. An aqueous system refers to any system including water.

Accordingly, the invention provides emulsions of water insoluble active ingredients directly before the emulsions are applied to an aqueous system including macroemulsions, microemulsions, micellar emulsions and combinations thereof. Macroemulsions refer to emulsions wherein the particle size of the active ingredients dispersed within the emulsion are greater than 200 nanometers (nm). Micro-emulsions refer to emulsions wherein the particle size of the active ingredients dispersed within the emulsion are between 10 and 200 nm. Micellar emulsions refer to emulsions wherein the particle size of the active ingredients dispersed within the emulsion are less than 10 nm.

Microemulsions are dispersions of one liquid phase in a second immiscible phase. They can be water continuous (o/w) or oil continuous (w/o) where "oil" denotes an organic liquid (or liquids) of low to no water solubility. A unique property of micro-emulsions is that the interfacial tension between the two phases is very low, much lower than can be measured with conventional instruments including a DuNouy Tensiometer. This low interfacial tension results from very specific combinations of "oil" (water immiscible organic liquid) and surfactants and water, and is manifested in the particle size of the dispersed phase being extremely small, usually less than 1000 angstroms. Since this is small in relation to the wave length of visible light, both micro-emulsions and micellar emulsions appear optically transparent. Microemulsions and micellar emulsions are stable toward phase separation for periods measured in years. This contrasts to the normal macroemulsions, which have an opalescent or milky appearance and where phase separation will typically occur within hours to weeks after the emulsion is prepared.

Active ingredients according to the invention are compounds and polymers selected from biocides, corrosion inhibitors, scale inhibitors, acrylic polymers, agricultural chemicals and combinations thereof. Active ingredients used according to the invention are water insoluble (including low water solubility) and are provided as neat liquids, concentrates and dispersions. According to one embodiment, aqueous concentrates and aqueous dispersions of the active ingredients are provided. According to a separate embodiment concentrates and dispersions of the active ingredient include one or more organic solvents are provided. Active ingredients are preferably readily dispersible in water.

High shear mixers including micro-mixers are usefully employed in accordance with the invention to form stable emulsions of the one or more water insoluble active ingredients. The micro-mixers emulsify the water insoluble active ingredients of the invention with little to no added additives including surfactants and solvents. The invention provides several advantages. Water insoluble active ingredients of the invention are difficult to emulsify using conventional mixing technology and require significant quantities of additives, including surfactants and solvents. In some instances, certain solvents are utilized to render the active ingredient soluble and have adverse environmental impacts associated such solvents. Micro-mixers emulsify the water insoluble active ingredients of the invention using solvents that have little to no adverse environmental impact. Micro-mixers can be used to prepare emulsions of water insoluble biocides including isothiazolones, as described in U. S. Patent Nos. 4,954,338; 5,444,078 and European Patent Publication Nos. EP 0 302 701; EP 0 648 414, but do not require significant quantities of added surfactants and solvents to form stable micro-emulsions. Surfactants are expensive and typically contribute a significant amount to the manufacturing costs of an emulsion prepared in this manner. The surfactants also have undesirable environmental impacts and consequences, including toxicity and foaming, as a result of their inherent surface active nature. The inventors have discovered that emulsions formed using a micro-mixing reactor have the required stability to be introduced or dosed into an aqueous environment of use after mixing. The process provides other advantages. Certain microemulsions comprising water insoluble active ingredients, including isothiazolones, surfactants and solvents, exhibit foaming problems in closed aqueous systems, as a result of surfactants present in the microemulsion. Emulsions formed using the process of the invention, however, are free of surfactants and the risk of such microemulsions foaming in the aqueous systems is minimal to none.

Any commercially available micro-mixing device is useful in forming emulsions of the invention. Suitable examples of micro-mixers include interdigital micro-mixers, stainless steel micro-mixers, micro-mixers that can be pressurized up to 1000 bar, glass micro-mixers having different outlet geometries, rectangular shaped interdigital micro-mixers, slit shaped interdigital micro-mixers, triangular-shaped interdigital micro-mixers, cyclone micro-mixers capable of fluid multi-lamination, vertical injection cyclone micro-mixers, horizontal injection cyclone micro-mixers, combined horizontal and vertical injection micro-mixers, split-recombine micro-mixers, caterpillar micro-mixers, impinging jet micro-mixers useful in fouling sensitive processes, impinging jet micro-mixers including jets of various sizes and inclinations, separation layer micro-mixers, pluralities of similar and different micro-mixers and combinations thereof. Suitable examples of micro-mixers are described in International Patent Publication Nos. WO 00/62913; WO 00/072955; WO 00/068300; WO 02/16017; WO 01/43857; WO 00/54735; U. S. Patent Publication No. 20020077373 A1; and U. S. Patent Nos. 6,305,834; 6,221,332.

High shear mixers including macro-mixers are usefully employed in accordance with the invention to form stable emulsions of the one or more water insoluble active ingredients. A suitable example of such a macro-mixer is described in U. S. Patent No. 6,422,736. High shear mixers including micro-mixers used in preparing micelles and micellar emulsions are well known and are also usefully employed in accordance with the invention to form stable micro-emulsions of the one or more water insoluble active ingredients.

One advantage of the invention is that emulsions prepared using the process of the invention are directly applied to an aqueous environment of use directly after being formed, obviating problems associated with phase separation, which relates to emulsion stability. Emulsions including one or more water insoluble active ingredients prepared using the process of the invention have a wide range of stability depending on the aqueous environment they are directly applied to. Macroemulsions, where phase separation will typically occur within hours to weeks after the emulsion is prepared, as well as microemulsions and micellar emulsions, which are stable toward phase separation for periods measured in years, are all usefully employed in accordance with the invention to treat aqueous systems.

The process of the invention is used to introduce one or more water insoluble active ingredients, including biocides, fungicides, corrosion inhibitors, agricultural chemicals, scale inhibiting compositions, dispersants, de-foamers, acrylic polymers and latexes, inert fluorescent tracers and combinations thereof, into an aqueous environment of use.

According to one embodiment, the invention provides a stable microemulsion free of surfactant comprising one or more active ingredients having low water solubility, wherein the water insoluble active ingredients are biocides and wherein the micro-emulsion is prepared using a micro-mixer. According to a separate embodiment, the invention provides a stable microemulsion free of both surfactant and organic solvent. According to a separate embodiment, the invention provides a stable microemulsion free of surfactant and having significantly reduced amounts of organic solvent.

Suitable examples of biocides that are usefully employed in accordance with the present invention include isothiazolones of low to no water solubility as described in U. S. Pat. Nos. 3,523,121; 3,761,488; 4,954,338; 5,108,500; 5,200,188; 5,292,763; 5,444,078; 5,468,759; 5,591,706; 5,759,786; 5,955,486 and European Pat. Nos. EP 0 302 701; EP 0 490 565; EP 0 431 752; EP 0 608 911; EP 0 608 912; EP 0 608 913; EP 0 611 522 and EP 0 648 414.

According to one embodiment of the invention, isothiazolones useful in the invention are the isothiazolones 2-octyl-3-isothiazolone and 4,5-dichloro-2-octyl-3-isothiazolone.

Isothiazolones of low to no water solubility are often prepared as a concentrate or dispersion of isothiazolone in a water miscible organic solvent such as propylene glycol. These concentrates and dispersions are diluted by the user in water or various aqueous based media to control growth of microorganisms. This approach sometimes has the disadvantage of poor homogeniety of the isothiazolone in the dilution when the solubility of the isothiazolone is exceeded. Often it is desirable to market the isothiazolone at active ingredient (AI) levels of only several percent in the concentrate to be diluted. This requires a large amount of organic solvent per AI unit. An active ingredient concentrate would have substantial cost advantage and environmental advantages by replacing all or most of the organic solvent with water. A microemulsion form of the isothiazolone prepared according to the invention remains a stable micro-emulsion after it is formed. Using a micro-mixer to form the emulsion directly before dosing the emulsion to aqueous systems overcomes required additives and the preparation of such micro-emulsions as described in U. S. Patent Nos. 4,954,338; 5,444,078 and European Patent Publication Nos. EP 0 302 701; EP 0 648 414.

Other suitable examples of biocidal active ingredients include benzisothiazolone, 4,5-dichloro-2-n-octyl-3-isothiazolone, 2-n-octyl-3-isothiazolone, dibromonitriloproprionamide (DBNPA), 2-(thiocyanomethylthio)benzthiazole (TCMTB), iodopropargylbutylcarbamate (IPBC) and parabens. Additional suitable examples of active ingredients include agricultural chemicals such as 2-chloro-1-(3-ethoxy-4-nitrophenoxy)-4-(trifluoromethyl) benzene, 2,4-dinitro-6-octyl-phenyl-crotonate, and alpha-butyl-alpha-(4-chlorophenyl)-1H-1,2,4-triazole-1-propanenitrile.

According to one embodiment of the invention, one or more active ingredient compounds which are less than 1000 ppm soluble in water at room temperature form stable emulsions using a micro-mixer to prepare the emulsion directly before use.

It is well known in the art that the performance of microbiocides is frequently enhanced by combining with one or more other microbiocides. In fact, there have been numerous examples of synergistic combinations of biocides. Thus, it is reasonably expected that other known microbiocides are combined advantageously with the micro-emulsions of the invention to treat aqueous systems.

Suitable scale inhibitors include for example polyphosphates and polycarboxylic acid homopolymers and copolymers such as described in U. S. Patent No. 4,936,987. Polymers usefully employed according to the invention can be prepared by conventional emulsion, solution or suspension polymerization, including those processes disclosed in U. S. Patent No. 4,973,409.
The emulsions of the present invention can also be used with other agents to enhance corrosion inhibition of copper, aluminum, mild steel, alloys of these and other metals. Examples of these agents include phosphates or phosphoric acid, polyphosphates such as tetrapotassium pyrophosphate and sodium hexametaphosphate, zinc, tolyltriazole, benzotriazole and other azoles, molybdate, chromate, phosphonates such as 1-hydroxyethylidene- 1,1-diphosphonic acid, aminotris(methylene phosphonic acid), hydroxyphosphonoacetic acid and 2-phosphonobutane-1,2,4-tricarboxylic acid, polymeric corrosion inhibitors such as poly(meth)acrylic acid or polymaleic acid and copolymers of acrylic, methacrylic and maleic acid, as well as their alkali metal and alkaline earth metal salts.

In addition, the emulsions may also be used with other agents such as scale inhibitors. Examples of these agents include poly(meth)acrylic acid, polymaleic acid, copolymers of acrylic, methacrylic or maleic acid, phosphonates as previously described, and chelants such as nitrilotriacetic acid or ethylenediamine tetraacetic acid, as well as their metal salts. The agents described may be applied in a single formulation or applied separately.

The solids content of the concentrates and dispersions may be from about 10 % to about 95 % by weight. The viscosity of the aqueous composition may be from 0.05 to 2000 Pa.s (50 cps to 2,000,000 cps), as measured using a Brookfield viscometer; the viscosities appropriate for different end uses and application methods vary considerably.

In a yet another separate embodiment, small amounts of one or more nonpolar, water immiscible solvent selected from the group consisting of benzyl alcohol, benzyl acetate, pine oil, phenethyl alcohol, xylene, phenoxyethanol, butyl phthalate, 2,2,4-trimethyl-1,3-pentanediol monoisobutyrate, and alkylbenzene, said solvent being capable of dissolving at least 5% by weight of AI at room temperature, is used to dissolve the active ingredient(s) or assist in formation of a stable microemulsion.

Microbiocide containing micro-emulsions of the invention are useful in many areas of preservation including disinfectants, sanitizers, cleaners, deodorizers, liquid and powder soaps, hide removers, oil and grease removers, food processing chemicals, dairy chemicals, food preservatives, animal food preservatives, wood preservation, polymer latices, paint, lazures, stains, mildewicides, hospital and medical antiseptics, medical devices, metal working fluids, cooling water, air washers, petroleum production, paper treatment, pulp and paper slurries, paper mill slimicides, petroleum products, adhesives, textiles, pigment slurries, latexes, leather and hide treatment, petroleum fuel, jet fuel, laundry sanitizers, agricultural formulations, inks, mining, non-woven fabrics, petroleum storage, rubber, sugar processing, tobacco, swimming pools, photographic rinses, cosmetics, toiletries, pharmaceuticals, chemical toilets, household laundry products, diesel fuel additives, waxes and polishes, oil field applications, and many other applications where water and organic materials come in contact under conditions which allow the growth of undesired microorganisms. Other active ingredients are useful as fungicides, miticides, herbicides, insecticides, and plant growth regulators.

Typical aqueous systems treated by the process of the invention include, for example, recirculating cooling units, open recirculating cooling units that utilize evaporation as a source of cooling, closed loop cooling units, heat exchanger units, reactors, equipment used for storing and handling liquids, boilers and related steam generating units, radiators, flash evaporating units, refrigeration units, reverse osmosis equipment, gas scrubbing units, blast furnaces, paper and pulp processing equipment, sugar evaporating units, steam power plants, geothermal units, nuclear cooling units, water treatment units, food and beverage processing equipment, pool recirculating units, mining circuits, closed loop heating units, machining fluids used in operations such as for example drilling, boring, milling, reaming, drawing, broaching, turning, cutting, sewing, grinding, thread cutting, shaping, spinning and rolling, hydraulic fluids, cooling fluids, oil production units and drilling fluids.

As used herein, metallic components in contact with the aqueous system are processed from any metal for which corrosion and/or scaling can be prevented. Typical examples of metals requiring corrosion protection are copper, copper alloys, aluminum, aluminum alloys, ferrous metals such as iron, steels such as low carbon steel, chromium steel and stainless steel, iron alloys and combinations thereof.

The invention also provides a process for recycling an emulsion through an aqueous system comprising the steps of: (a) micro-mixing water and an aqueous dispersion of one or more water insoluble active ingredients; and (b) dosing the emulsion directly to an aqueous system; and (c) micro-mixing portions of the aqueous system at time intervals selected from periodic, irregular and continuous; thereby recycling portions of the dosed emulsion back into the aqueous system. In the case where the aqueous system is closed the recycling of emulsion in the aqueous system is carried out continuously. The recycling of the dosed emulsions provides advantages of convenience of lowered environmental impact and exposure to active ingredients and provides a means to safely handle, dispense and recover such active ingredients.

Some embodiments of the invention are described in detail in the following Examples. All ratios, parts and percentages are expressed by weight unless otherwise specified, and all reagents used are of good commercial quality unless otherwise specified.

### Example 1 (Dosing of a Water Insoluble Active Ingredient to a Cooling Tower)

A 50 wt. % solution of 4,5-dichloro-2-octyl-3-isothiazolone in benzyl alcohol is fed to an array of slit shaped interdigital micro-mixers at a feed rate of 50 mL/minute, combined with water fed to the micro-mixer at a feed rate of 600 mL/minute. The water contains no surfactants. The resulting emulsion exiting the micro-mixer it is directly dosed to cooling water in a 50,000 gallon (12,500 Liter) cooling tower, where is effectively distributed and re-circulated throughout the cooling water. After about 20 minutes, the isothiazolone concentration in the cooling water reaches a desired concentration of 3 ppm and the emulsion feed is stopped. Effective control of algae is provided and the isothiazolone is circulated with no risk of undesirable foaming caused by the presence of surfactants in the microbiocidal micro-emulsion. Focusing micro-mixers also produce similar results as compared to the micro-mixers described above.

### Example 2 (Dosing of a Water Insoluble Active Ingredient to a Paper Pulp Slurry Tank)

A 10,000 liter pulp slurry tank has a continuous throughput averaging 6,600 liters/minute. A 50 wt. % solution of 4,5-dichloro-2-octyl-3-isothiazolone in benzyl alcohol is fed to an array of slit shaped interdigital micro-mixers at a feed rate of 56 mL/minute, combined with water fed to the micro-mixer at a feed rate of 600 mL/minute. The water contains no surfactants. The resulting emulsion exiting the micro-mixer is directly charged to water in the pulp slurry tank, where it is effectively distributed and re-circulated throughout the tank water. The isothiazolone provides effective mold proofing in paper that is prepared from pulp treated in the pulp slurry tank. Focusing micro-mixers also produce similar results as compared to the micro-mixers described above.

### Example 3 (Dosing of a Water Insoluble Active Ingredient to a Cooling Tower)

Melted 2-octyl-3-isothiazolone as a neat liquid is fed to an array of slit shaped interdigital micro-mixers at a feed rate of 50 mL/minute, combined with water fed to the micro-mixer at a feed rate of 600 mL/minute. The water contains no surfactants and solvents. The resulting emulsion exiting the micro-mixer it is directly dosed to cooling water in a 50,000 gallon (12,500 Liter) cooling tower, where is effectively distributed and re-circulated throughout the cooling water. After about 20 minutes, the isothiazolone concentration in the cooling water reaches a desired concentration of 3 ppm and the emulsion feed is stopped. Effective control of algae is provided and the isothiazolone is circulated with no risk of undesirable foaming caused by the presence of surfactants in the microbiocidal micro-emulsion. Focusing micro-mixers also produce similar results as compared to the micro-mixers described above.

Examples 1 and 2 illustrate surfactant-free emulsions having reduced levels of organic solvents prepared by the process of the present invention. Example 3 illustrates a surfactant- and solvent-free emulsion prepared by the process of the present invention.

## Claims

1. A process for treating an aqueous system comprising the steps of: (a) using high-shear mixing apparatus to mix together water and an aqueous dispersion of one or more water insoluble active ingredients selected from biocides, corrosion inhibitors, scale inhibitors, acrylic polymers agricultural chemicals, and combinations thereof, to form an emulsion; and (b) dosing the emulsion directly to the aqueous system; wherein the emulsion is free of additives including surfactants, co-surfactants, emulsifiers and stabilizers.

2. The process according to claim 1, wherein the emulsion includes no organic solvents.

3. The process according to claim 1, wherein the aqueous system is treated with a microemulsion comprising one or more biocides.

4. The process according to claim 3, wherein the microemulsion comprises one or more isothiazolones selected from the group consisting of 2-octyl-3-isothiazolone and 4,5-dichloro-2-octyl-3-isothiazolone.

5. The process according to claim 1, wherein aqueous system is selected from the group consisting of water treatment units, recirculating cooling units, open recirculating cooling units that utilize evaporation as a source of cooling, closed loop cooling units, heat exchanger units, reactors, equipment used for storing and handling liquids, boilers and related steam generating units, radiators, flash evaporating units, refrigeration units, reverse osmosis equipment, gas scrubbing units, blast furnaces, paper and pulp processing equipment, sugar evaporating units, steam power plants, geothermal units, nuclear cooling units, food and beverage processing equipment, pool recirculating units, mining circuits, closed loop heating units, machining fluids used in operations such as for example drilling, boring, milling, reaming, drawing, broaching, turning, cutting, sewing, grinding, thread cutting, shaping, spinning and rolling, hydraulic fluids, cooling fluids, oil production units and drilling fluids.

6. A process according to claim 1 further comprising further comprising the step (c) using high-shear mixing apparatus to mix portions of the aqueous system at time intervals selected from periodic, irregular and continuous; thereby recycling portions of the dosed emulsion back into the aqueous system.

7. The process according to claim 6, wherein the aqueous system is treated with a microemulsiom comprising one or more isothiazolones, the microemulsion including no added surfactants, co-surfactants, emulsifiers and stabilizers.

8. A process according to claim 1 and 3 to 6 wherein the emulsion comprises one or more non-polar water immiscible solvents selected from benzyl alcohol, benzyl acetate, pine oil, phenethyl alcohol, xylene, phenoxyethanol, butyl phthalate, 2,2,4-trimethyl -1,3-pentanediol monoisobutyrate and alkylbenzene, said solvent being capable of dissolving at least 5% by weight of active ingredient at room temperature.

## Patentansprüche

1. Verfahren zum Behandeln eines wäßrigen Systems, umfassend die Schritte (a) des Verwendens einer Mischvorrichtung hoher Scherung, um Wasser und eine wäßrige Dispersion von einem oder mehreren wasserunlöslichen aktiven Inhaltsstoffen, ausgewählt aus Bioziden, Korrosionsinhibitoren, Inkrustations- bzw. Ablagerungsinhibitoren, Acrylpolymeren, Agrochemikalien und Kombinationen davon, miteinander zu mischen, um eine Emulsion zu bilden, und (b) des direkten Dosierens der Emulsion zu dem wäßrigen System, wobei die Emulsion frei von Additiven, einschließlich grenzflächenaktiven Mitteln, grenzflächenaktiven Hilfsmitteln, Emulgatoren und Stabilisatoren, ist.

2. Verfahren nach Anspruch 1, wobei die Emulsion keine organischen Lösungsmittel einschließt.

3. Verfahren nach Anspruch 1, wobei das wäßrige System mit einer Mikroemulsion, umfassend ein oder mehrere Biozide, behandelt wird.

4. Verfahren nach Anspruch 3, wobei die Mikroemulsion ein oder mehrere Isothiazolone, ausgewählt aus der Gruppe, bestehend aus 2-Octyl-3-isothiazolon und 4,5-Dichlor-2-octyl-3-isothiazolon, umfaßt.

5. Verfahren nach Anspruch 1, wobei das wäßrige System aus der Gruppe, bestehend aus Wasserbehandlungseinheiten, Umlaufkühleinheiten, offenen Umlaufkühleinheiten, die Verdampfung als eine Kühlquelle verwenden, geschlossenen Kreislaufkühleinheiten, Wärmeaustauschereinheiten, Reaktoren, zum Lagern und zur Handhabung von Flüssigkeiten verwendete Ausrüstung, Boiler und verwandte Dampferzeugungseinheiten, Radiatoren, Flash-Verdampfungseinheiten, Kühleinheiten, Umkehrosmoseausrüstung, Gasreinigungseinheiten, Hochöfen, Papier- und Papiermasseverarbeitungsausrüstung, Zuckerverdampfungseinheiten, Dampfkraftwerke, geothermische Einheiten, nukleare Kühleinheiten, Lebensmittel- und Getränkeverarbeitungsausrüstung, Pool-Zirkulationseinheiten, Bergbaukreisläufe, geschlossenen Kreislaufwärmeinheiten, Bearbeitungsflüssigkeiten, verwendet in Arbeitsvorgängen wie beispielsweise Drillen, Bohren, Mahlen, Nachbohren bzw. Reiben, Ziehen bzw. Verstrecken, Ausdornen, Drehen, Schneiden, Nähen, Schleifen, Gewindeschneiden, Formschleifen bzw. Kurzhobeln, Verspinnen und Walzen, hydraulischen Flüssigkeiten, Kühlflüssigkeiten, Ölproduktionseinheiten und Drillflüssigkeiten, ausgewählt ist.

6. Verfahren nach Anspruch 1, weiter umfassend den Schritt (c) des Verwendens einer Mischvorrichtung hoher Scherung, um Portionen des wäßrigen Systems bei Zeitintervallen, ausgewählt aus periodisch, unregelmäßig und kontinuierlich, zu mischen, um **dadurch** Portionen der dosierten Emulsion zurück in das wäßrige System zu rezyklieren.

7. Verfahren nach Anspruch 6, wobei das wäßrige System mit einer Mikroemulsion, umfassend ein oder mehrere Isothiazolone, behandelt wird, wobei die Mikroemulsion keine zugegebenen grenzflächenaktiven Mittel, grenzflächenaktiven Hilfsmittel, Emulgatoren und Stabilisatoren einschließt.

8. Verfahren nach Anspruch 1 und 3 bis 6, wobei die Emulsion ein oder mehrere nicht-polare, wasserunmischbare Lösungsmittel, ausgewählt aus Benzylalkohol, Benzylacetat, Pinienöl, Phenethylalkohol, Xylol, Phenoxyethanol, Butylphthalat, 2,2,4-Trimethyl-1,3-pentandiolmonoisobutyrat und Alkylbenzol, umfaßt, wobei das Lösungsmittel befähigt ist, mindestens 5 Gew.-% an aktivem Inhaltsstoff bei Raumtemperatur zu lösen.

## Revendications

1. Procédé servant à traiter un système aqueux comprenant les étapes consistant à : (a) utiliser un appareil de mélange à cisaillement élevé pour mélanger ensemble l'eau et une dispersion aqueuse d'un ou plusieurs ingrédients actifs insolubles dans l'eau choisis entre des biocides, des inhibiteurs de corrosion, des anti-incrustants, des polymères acryliques, des produits chimiques pour l'agriculture et des associations de ceux-ci, pour former une émulsion ; et (b) doser l'émulsion directement dans le système aqueux ; dans lequel l'émulsion est exempte d'additifs comprenant des tensioactifs, des co-tensioactifs, des émulsifiants et des stabilisants.

2. Procédé selon la revendication 1, dans lequel l'émulsion ne comprend pas de solvants organiques.

3. Procédé selon la revendication 1, dans lequel le système aqueux est traité avec une microémulsion comprenant un ou plusieurs biocides.

4. Procédé selon la revendication 3, dans lequel la microémulsion comprend une ou plusieurs isothiazolones choisies dans le groupe constitué de la 2-octyl-3-isothiazolone et de la 4,5-dichloro-2-octyl-3-isothiazolone.

5. Procédé selon la revendication 1, dans lequel le système aqueux est choisi dans le groupe constitué d'unités de traitement d'eau, d'unités de refroidissement à recirculation, d'unités de refroidissement à recirculation ouvertes qui utilisent l'évaporation comme source de refroidissement, d'unités de refroidissement à circuit fermé, d'unités d'échangeurs de chaleur, de réacteurs, de matériel utilisé pour le stockage et la manipulation de liquides, de chaudières et d'unités produisant de la vapeur apparentées, de radiateurs, d'unités d'évaporation éclair, d'unités de réfrigération, de matériel d'osmose inverse, d'unités de lavage de gaz, de hauts fourneaux, de matériel de transformation de la pâte à papier et du papier, d'unités d'évaporation pour le sucre, de centrales thermiques à vapeur, d'unités géothermiques, d'unités de refroidissement pour le nucléaire, de matériel de transformation d'aliments et de boissons, d'unités de recirculation d'eau de piscine, de circuits d'exploitations minières, d'unités de chauffage à circuit fermé, de fluides d'usinage utilisés dans des opérations telles que par exemple le sondage, le forage, le broyage, l'alésage, l'étirage, le brochage, le tournage, le coupage, la couture, le meulage, le filetage, le formage, le repoussage et le laminage, de fluides hydrauliques, de fluides de refroidissement, d'unités de production de pétrole et de fluides de forage.

6. Procédé selon la revendication 1 comprenant en plus l'étape (c) consistant à utiliser un appareil de mélange à cisaillement élevé pour mélanger des portions du système aqueux à des intervalles de temps choisis entre des intervalles périodiques, irréguliers et continus ; ce par quoi on recycle des portions de l'émulsion dosée vers le système aqueux.

7. Procédé selon la revendication 6, dans lequel le système aqueux est traité avec une microémulsion comprenant une ou plusieurs isothiazolones, la microémulsion ne comprenant pas de tensioactifs, co-tensioactifs, émulsifiants et stabilisants ajoutés.

8. Procédé selon les revendications 1 et 3 à 6, dans lequel l'émulsion comprend un ou plusieurs solvants non polaires non miscibles avec l'eau choisis entre l'alcool benzylique, l'acétate de benzyle, l'huile de pin, l'alcool phénéthylique, le xylène, le phénoxyéthanol, le phtalate de butyle, le monoisobutyrate de 2,2,4-triméthyl-1,3-pentanediol et un alkylbenzène, ledit solvant étant capable de dissoudre au moins 5 % en poids d'ingrédient actif à température ambiante.
